# EUROPÄISCHE PATENTSCHRIFT

(11) **EP 1 834 724 B1**
(45) Veröffentlichungstag und Bekanntmachung des Hinweises auf die Patenterteilung: **13.10.2010**
(21) Anmeldenummer: 07000645.7
(22) Anmeldetag: 13.01.2007
(51) Int. Cl.: B23H 11/00, B23Q 3/10

(54) **Spanneinrichtung zum Festlegen von zu bearbeitenden Werkstücken an einer Werkzeugmaschine**
Clamping arrangement for positioning workpieces in a machine tool
Dispositif de fixation pour positionner des pieces dans une machine-outil.

(30) Priorität: 13.03.2006 CH 3932006
(43) Veröffentlichungstag der Anmeldung: 19.09.2007
(73) Patentinhaber: F-Tool International AG, 5040 Schoeftland (CH)
(72) Erfinder: Troxler, Ferdinand, 6214 Schenkon (CH)
(74) Vertreter: Rottmann, Maximilian

(56) Entgegenhaltungen:
- EP-A- 0 351 836
- EP-A- 1 402 985
- US-A- 5 019 129
- PATENT ABSTRACTS OF JAPAN Bd. 013, Nr. 355 (P-914), 9. August 1989 (1989-08-09) & JP 01 114725 A (MITSUBISHI HEAVY IND LTD), 8. Mai 1989 (1989-05-08)
- PATENT ABSTRACTS OF JAPAN Bd. 2002, Nr. 11, 6. November 2002 (2002-11-06) & JP 2002 192427 A (NIPPON KOSHUHA STEEL CO LTD), 10. Juli 2002 (2002-07-10)

## Beschreibung

Die vorliegende Erfindung bezieht sich auf eine gemäss dem Oberbegriff des Anspruchs 1 ausgebildete Spanneinrichtung zum Festlegen von zu bearbeitenden Werkstücken an einer mit einem Bearbeitungstisch versehenen Werkzeugmaschine, insbesondere einer Drahterodiermaschine.

Soll ein Werkzeug oder Werkstück an dem Bearbeitungstisch einer Werkzeugmaschine festgespannt werden, so wird das Werkstück bzw. Werkzeug üblicherweise zuerst an einer Palette fixiert, welch letztere dann an einem Spannhalter festgespannt wird. Der Spannhalter selber ist in den meisten Fällen fest mit der Arbeitsmaschine verbunden. Die Betätigung der Spannelemente des Spannhalters erfolgt üblicherweise manuell, elektromechanisch, pneumatisch oder hydraulisch.

Aus der EP-B-0 202 452 ist ein Halte- und Bezugssystem für eine Draht-Funkenerosionsmaschine bekannt. Dieses Halte- und Bezugssystem weist Referenzteile in der Form von flachen plattenförmigen Streifen aus gehärtetem Stahl auf, welche auf dem Maschinentisch der Funkenerosionsmaschine befestigt werden. Der Querschnitt dieser Referenzteile hat im wesentlichen ein Schwalbenschwanzprofil, wobei die Oberfläche eine grössere Breite hat als die Unterfläche. Das Referenzteil weist eine an die Oberfläche angrenzende Seitenfläche auf, die mit der Unterfläche sowie der Stirnseite einen rechten Winkel einschliesst und die Y-Referenz bildet. Das Referenzteil weist zudem mehrere Durchgangslöcher zur Aufnahme von Bolzen auf, mittels welchen das Referenzteil in entsprechenden Gewindebohrungen am Maschinentisch fixiert und positioniert werden kann. Die X-Referenz wird durch einen mit der Stirnfläche des Referenzteils verbundenen blockförmigen Ansatz gebildet, der eine Anschlagfläche aufweist. Ein zu befestigendes Werkstück wird an der an die Oberfläche angrenzenden Seitenfläche an dem Referenzteil angelegt und mittels Klammem festgespannt. Ein derartiges Halte- und Bezugssystem dürfte sich insbesondere für leichtere Werkstücke eignen. Zudem ist die Herstellung der Referenzteile aufwändig und teuer.

Aus der US-A-5,019,129, welche als nächstliegender Stand der Technik anzusehen ist, ist ein Werkstück-Halterungssystem mit einem Spannrahmen bekannt, der eine feststehende sowie eine bewegliche Spannbacke umfasst. Ein maschinenseitig angeordneter Halterungstisch ist mit einer schwalbenschwanzförmigen Erhebung versehen, an der eine mit einer korrespondierenden Ausnehmung versehene Halterungsplatte mittels einer Klemmstruktur justierbar ist. An der Halterungsplatte ist ein Adapter festgelegt, der ebenfalls mit einem Schwalbenschwanz versehen, an dem der Spannrahmen fixierbar ist. Die Klemmstruktur zum Festlegen der Halterungsplatte am Halterungstisch umfasst federvorgespannte Stifte sowie eine Sperrschraube.

Schliesslich ist aus der EP-A-1 402 985 eine einen Rahmen umfassende Spannvorrichtung bekannt, die auf einem Maschinentisch befestigt wird. Der Rahmen besteht aus zwei Seitenschenkeln sowie einer dazwischen angeordneten Distanz. Der Rahmen weist im weiteren zwei zwischen den Seitenschenkeln verlaufende Führungselemente auf, an denen mindestens ein Klemmschlitten verschiebbar geführt ist. Der Klemmschlitten dient der Aufnahme und dem Einspannen von Werkstücken.

Die Erfindung zielt darauf ab, eine Spanneinrichtung zum Festlegen von zu bearbeitenden Werkstücken an einer mit einem Bearbeitungstisch versehenen Werkzeugmaschine, insbesondere einer Drahterodiermaschine, derart weiterzubilden, dass diese einfach aufgebaut und kostengünstig herstellbar ist, dass sie stabil ist und sich insbesondere zum Festspannen von unterschiedlich gestalteten Werkstücken eignet, und dass die Werkstücke schnell und einfach festspannbar bzw. wieder lösbar sein sollen.

Hierzu wird nach der Erfindung eine Spannvorrichtung gemäss dem Anspruch 1 bereitgestellt.

Bevorzugte Ausführungsformen und Weiterbildungen des Erfindungsgegenstandes sind in den abhängigen Ansprüchen 2-15 umschrieben.

Nachfolgend wird ein Ausführungsbeispiel der erfindungsgemässen Spannvorrichtung unter Bezugnahme auf die beiliegenden Zeichnungen näher erläutert. In den Zeichnungen zeigt:
- Fig. 1: eine perspektivische Ansicht der Einzelteile der Spanneinrichtung;
- Fig. 2: eine Draufsicht auf die Spanneinrichtung;
- Fig. 3: einen Querschnitt durch die Spanneinrichtung entlang der Linie A-A in Fig.2;
- Fig. 4: einen Querschnitt durch die Spanneinrichtung entlang der Linie B-B in Fig.2;
- Fig. 5: einen Querschnitt durch die Spanneinrichtung entlang der Linie C-C in Fig.2;
- Fig. 6: eine perspektivische Ansicht eines an einer Werkstückaufnahme festgespannten Werkstücks.

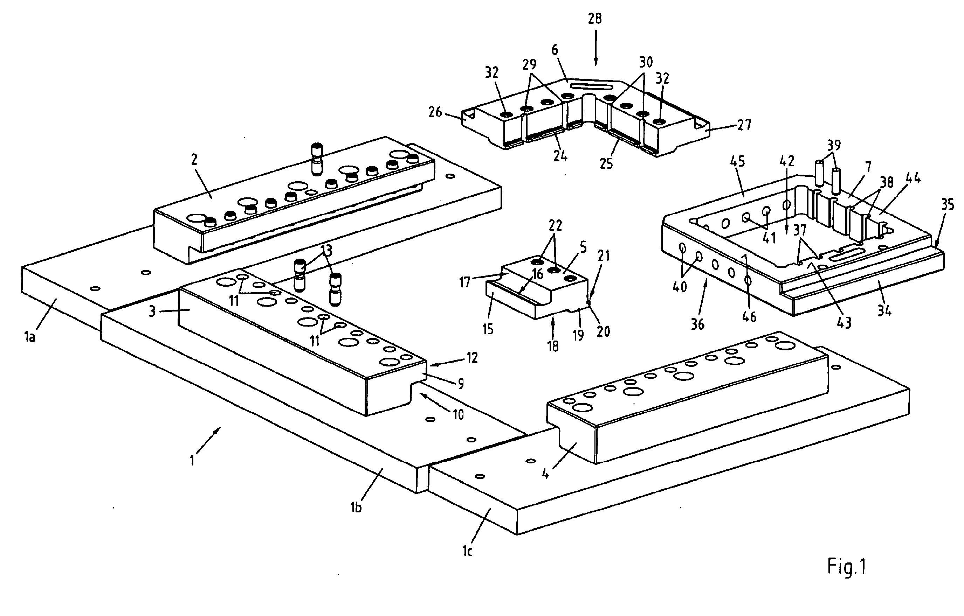

Die Fig. 1 zeigt eine perspektivische Ansicht der Spanneinrichtung. Die Spanneinrichtung dient dem Festlegen von zu bearbeitenden Werkstücken an einer mit einem Bearbeitungstisch 1 versehenen Werkzeugmaschine (nicht dargestellt), insbesondere einer Drahterodiermaschine. Der Bearbeitungstisch 1 der Werkzeugmaschine wird in diesem Fall durch drei rechteckige, U-förmig angeordnete Platten 1 a, 1b, 1 c gebildet, zwischen welchen ein Arbeitsbereich frei bleibt, innerhalb dessen sich die Bearbeitungselemente der Werkzeugmaschine in X-, Y- und Z-Richtung frei bewegen können. Es versteht sich, dass der dargestellte Bearbeitungstisch 1 lediglich beispielhaften Charakter besitzt.

Die Spanneinrichtung umfasst im vorliegenden Beispiel drei identisch ausgebildete Spannleisten 2, 3, 4 sowie drei unterschiedlich ausgebildete Werkstückaufnahmen 5, 6, 7, wobei die Spanneinrichtung im Minimum zumindest eine Spannleiste 2, 3, 4 sowie zumindest eine Werkstückaufnahme 5, 6, 7 umfasst. Die jeweilige Spannleiste 2, 3, 4 ist auf der dem Maschinentisch 1 zuzuwendenden Unterseite mit einer planen, die Z-Auflage bildenden Auflagefläche versehen. Jede der drei Spannleisten 2, 3, 4 ist mittels nicht näher dargestellten Befestigungsmitteln -Schrauben- fest mit je einer Platte 1 a, 1 b, 1 c des Bearbeitungstisches 1 verbunden. Anhand der mittleren Spannleiste 3 wird der grundsätzliche Aufbau einer Spannleiste näher erläutert. Die Spannleiste 3 ist auf ihrer zum Bearbeitungszentrum gerichteten Vorderseite mit einem länglichen Vorsprung 9 versehen, der zwischen sich und dem Maschinentisch eine im wesentlichen rechteckige Aussparung 10 begrenzt. Die Spannleiste 3 besitzt dadurch einen im wesentlichen L-förmigen Querschnitt. Der Vorsprung 9 ist mit einer Vielzahl von Gewindebohrungen 11 versehen, die zur Aufnahme von Spannelementen in Form von Schrauben vorgesehen sind. Stellvertretendend sind zwei solche Schrauben 13 eingezeichnet. Die Stirnseite 12 des länglichen Vorsprungs 9 der Spannleiste 3 ist plangeschliffen und bildet einen Anschlag für die jeweilige Werkstückaufnahme 5, 6, 7, wie anschliessend noch erläutert wird. Die ebenfalls plangeschliffene Unterseite der Spannleiste 3 kommt beim Festspannen auf der Oberseite der jeweiligen Platte 1b des Bearbeitungstisches 1 zur Anlage.

Um die Position einer Werkstückaufnahme 5, 6, 7 entlang einer Spannleiste, d. h in X- oder Y-Richtung festlegen zu können, sind Anschlagstifte vorgesehen, welche in einer Gewindebohrung 11 der jeweiligen Spannleiste 3 festgelegt werden können und einen seitlichen Anschlag für die jeweilige Werkstückaufnahme 5, 6, 7 bilden. Anstelle von Anschlagstiften können auch Anschlagelemente vorgesehen werden, welche mittels den Schrauben 13 an der jeweiligen Spannleiste festgelegt werden. Anschlagelemente sind insbesondere dann von Vorteil, wenn ein Werkstück nur an einer Leiste festgelegt wird und/oder wenn sehr kleine Werkstücke an einer Leiste festgespannt werden müssen. Auch wenn gleiche Werkstückeinheiten, d.h. Werkstückaufnahmen zusammen mit einem Werkstück, repetierbar an einer Spannleiste festgelegt werden sollen, sind Anschlagelemente von Vorteil bzw., sofern ein Werkstück an zwei um 90° zueinander versetzten Spannleisten festgelegt wird, sind keine Anschlagelemente notwendig.

Die erste Werkstückaufnahme 5 ist mit einem Klemmvorsprung 15 versehen, der dem Festspannen der Werkstückaufnahme 5 an der Spannleiste 3 dient. Auf der Seite des Klemmvorsprungs 15 ist die Werkstückaufnahme 5 mit einer Referenzfläche 17 versehen Der Klemmvorsprung 15 weist auf der Oberseite eine schräg zulaufende Spannfläche 16 auf, an welcher die Spannschrauben 13 der Spannleiste 3 derart angreifen, dass die Werkstückaufnahme 5 beim Festspannen an der Spannleiste 3 in die Aussparung 10 hineingezogen wird und mit ihrer Referenzfläche 17 an der Anschlagfläche 12 der Spannleiste 3 zur Anlage kommt und damit in X- oder Y-Richtung positioniert ist. Die Unterseite 18 der Werkstückaufnahme 5 ist mit einer plangeschliffenen Z-Auflage versehen, welche beim Fixieren der Werkstückaufnahme 5 an der Spannleiste 3 auf der Oberfläche des Maschinentisches 1 zur Anlage kommt, so dass die Werkstückaufnahme 5 in Z-Richtung positioniert ist. Die Werkstückaufnahme 5 ist auf der dem Klemmvorsprung 15 abgewandten Seite mit einer sich über die plane Unterseite 18 nach unten erstreckenden Absatz 19 versehen, der endseitig mit einem leistenförmigen Vorsprung 20 versehen ist, dessen Oberfläche als Auflagefläche 21 ausgebildet ist. Diese Auflagefläche 21 erstreckt sich in der gleichen Ebene wie die plane Unterseite 18 der Werkstückaufnahme 5 und dient dem Abstützen von Werkstücken in Z-Richtung. Wenn die Werkstückaufnahme 5 an der Spannleiste 3 festgelegt ist, erstreckt sich die Auflagefläche 21 des leistenförmigen Vorsprungs in der Ebene der Maschinentischoberfläche und damit in der maschinenseitig festgelegten Z-Ebene. Die Werkstückaufnahme 5 ist im weiteren mit mehreren Gewindebohrungen 22 versehen, welche der Aufnahme von Schrauben zum Festspannen von Briden dienen, mittels welchen Werkstücke an der Werkstückaufnahme 5 festgespannt werden können, wie nachfolgend noch näher erläutert wird. Eine derartige Werkstückaufnahme 5 kommt insbesondere als einseitige Z-Auflage für grössere Werkstücke zum Einsatz, wobei grössere Werkstücke vorzugsweise an zumindest zwei Werkstückaufnahmen festgelegt werden.

Natürlich können auch Werkstückaufnahmen vorgesehen werden, die anstelle eines sich nach unten erstreckenden Absatzes 19 mit einer durchgehend planen Unterseite versehen sind, so dass deren vorderes Ende nicht unterhalb der Oberfläche -Z-Referenz- des Maschinentisches zu liegen kommt. Dies ist insbesondere dann notwendig, wenn die Spanneinrichtung auf einem durchgehend planen Maschinentisch zum Einsatz kommen soll, der keinen Arbeitsbereich aufweist, der sich unter die Oberfläche des Maschinentischs erstreckt. Anstelle von Werkstückaufnahmen mit einer durchgehend planen Unterseite kann auch eine Art Zwischenscheibe verwendet werden, deren Dicke zumindest dem Z-Abstand des sich nach unten erstreckenden Absatzes 19 der Werkstückaufnahme 5 entspricht und die beim Festspannen der jeweiligen Werkstückaufnahme unterlegt werden, so dass der sich nach unten erstreckende Absatz 19 in Z-Richtung nicht unterhalb der Tischoberfläche zu liegen kommt.

Die zweite Werkstückaufnahme 6 ist in der Form eines 90° Winkels ausgebildet und auf der Vorderseite ebenfalls mit zwei um 90° zueinander versetzten leistenförmigen Vorsprüngen 24, 25 versehen, deren Oberseite Z-Auflageflächen für ein Werkstück bilden. Die Werkstückaufnahme 6 weist ebenfalls mehrere Gewindebohrungen 32 auf, welche der Aufnahme von Schrauben zum Festspannen von Briden dienen.

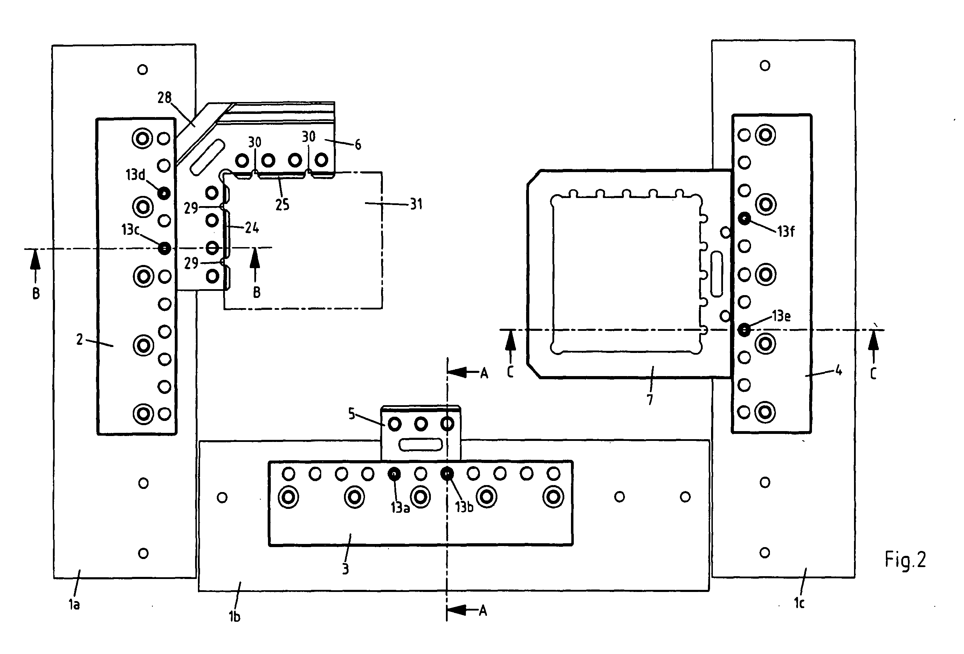

Entlang der beiden Innenseiten ist die Werkstückaufnahme 6 mit je zwei vertikal verlaufenden Schlitzen 29, 30 versehen, welche sich über die gesamte Höhe der Werkstückaufnahme 6 erstrecken und die Vorsprünge 24, 25 in einzelne Abschnitte unterteilen. Diese Schlitze 29, 30 ermöglichen das Durchführen -Einfädeln- eines Erodierdrahtes zwischen einem an der Werkstückaufnahme 6 festgelegten Werkstück und der Werkstückaufnahme 6, wie nachfolgend anhand der Fig. 2 noch näher erläutert wird.

Auf der Rückseite ist die Werkstückaufnahme 6 mit zwei um 90° zueinander versetzen Klemmvorsprüngen 26, 27 versehen, mittels welchen die Werkstückaufnahme 6 an einer Spannleiste fixierbar ist. Zwischen den beiden genannten Klemmvorsprüngen 26, 27 ist ein weiterer Klemmvorsprung 28 angeordnet, der um 45° versetzt zu den beiden genannten Klemmvorsprüngen 26, 27 angeordnet ist. Dadurch kann die Werkstückaufnahme 6 in insgesamt drei verschiedenen Lagen an einer Spannleiste fixiert werden. Eine solche Werkstückaufnahme 6 eignet sich insbesondere zu positionsgenauen Festspannen von rechteckigen wie auch runden Werkstücken. Zudem können grosse Werkstücke mittels zwei Werkstückaufnahmen 6 festgespannt und ggf. zum Bearbeiten um 180° verdreht festgespannt werden.

Die dritte Werkstückaufnahme 7 schliesslich ist in der Form eines rechteckigen Spannrahmens ausgebildet. Die Werkstückaufnahme 7 ist mit vier Rahmenseiten 43, 44, 45, 46 versehen, die eine zentrale Öffnung 42 zur Aufnahme eines Werkstücks begrenzen. An der einen Rahmenseite 43 ist ein Klemmvorsprung 34 angeformt, wobei anstelle eines einzigen Klemmvorsprungs 34 natürlich auch deren zwei oder drei vorgesehen werden können. Der Klemmvorsprung 34 ist auf der Oberseite mit einer planen, parallel zur Unterseite 36 verlaufenden Spannfläche 35 versehen. Die Unterseite 36 der Werkstückaufnahme 7 ist durchgehend plan ausgebildet. Zwei Rahmenseiten 43, 44 der Werkstückaufnahme 7 sind auf der Innenseite mit Bohrungen 37, 38 versehen, welche zur Aufnahme von Anschlagstiften 39 ausgebildet sind. Ein in die jeweilige Bohrung 37, 38 eingesetzter Anschlagstift 39 steht geringfügig über die Innenwand der entsprechenden Rahmenseite 43, 44 vor und bildet einen Anschlag für ein in der Werkstückaufnahme 7 festzuspannendes Werkstück. Durch das Vorsehen solcher Anschlagstifte 39 kann die Werkstückaufnahme 7 vergleichsweise günstig hergestellt werden, da beispielsweise ein herkömmlicher, d.h. nicht hochvergüteter Stahl als Grundmaterial für die Herstellung der Werkstückaufnahme 7 verwendet werden kann und deren Innenseiten zudem nicht hochpräzise bearbeitet werden müssen, da die Anschlagflächen in X- und in Y-Richtung nur durch die Anschlagstifte 39 gebildet werden. Die Bohrungen 37, 38 können natürlich auch zum Durchführen eines Erodierdrahtes genutzt werden, wenn an der Werkstückaufnahme 7 ein Werkstück festgespannt ist.

Die beiden anderen Rahmenseiten 45, 46 sind mit horizontal verlaufenden Gewindebohrungen 40, 41 versehen, welche der Aufnahme von Spannschrauben (nicht dargestellt) zum Festspannen eines Werkstücks in der Öffnung 42 dienen.

Im Gegensatz zu den beiden vorgängig ausgebildeten Werkstückaufnahmen sind bei der rahmenförmig ausgebildeten Werkstückaufnahme 7 keine leistenförmigen Vorsprünge vorgesehen, deren Oberseite Z-Auflageflächen für ein Werkstück bilden. Um in der Öffnung 42 der Werkstückaufnahme 7 Werkstücke in Z-Richtung festlegen zu können, kann die Werkstückaufnahme 7 auf eine plane Platte, bspw. eine geschliffene Gesteinsplatte gelegt und danach ein Werkstück in die Werkstückaufnahme 7 eingelegt werden, welches mittels Schrauben, die in die Gewindebohrungen 40, 41 eingesetzt werden, darin festgespannt wird.

Die Fig. 2 zeigt die Spanneinrichtung in einer Ansicht von oben, wobei jede Werkstückaufnahme 5, 6, 7 an einer Spannleiste festgelegt ist. Namentlich ist die erste Werkstückaufnahme 5 an der mittleren Spannleiste 3 festgespannt, während die zweite, winkelförmig ausgebildete Werkstückaufnahme 6 an der linken Spannleiste 2 fixiert ist und die dritte, in der Form eines Spannrahmens ausgebildete Werkstückaufnahme 7 an der rechten Spannleiste 4 festgelegt ist. Jede Werkstückaufnahme 5, 6, 7 ist mittels zweier Spannschrauben 13a, 13b; 13c, 13d; 13e, 13f an der jeweiligen Spannleiste 2, 3, 4 fixiert.

Aus dieser Ansicht ist insbesondere auch der dritte Klemmvorsprung 28 der winkelförmig ausgebildeten Werkstückaufnahme 6 ersichtlich, der zwischen den beiden um 90° zueinander versetzten Klemmvorsprüngen 26, 27 (Fig. 1) angeordnet ist. Im weiteren ist ein schematisch dargestelltes, an der winkelförmig ausgebildeten Werkstückaufnahme 6 festgelegtes Werkstück 31 ersichtlich. Durch die auf der Innenseite in die Schenkel der winkelförmig ausgebildeten Werkstückaufnahme 6 eingelassenen Schlitze 29, 30 wird das Durchführen -Einfädeln- eines Erodierdrahtes zwischen dem an der Werkstückaufnahme 6 festgelegten Werkstück 31 und der Werkstückaufnahme 6 ermöglicht. Dadurch kann ein an der Werkstückaufnahme 6 festgelegtes Werkstück 31 auch von der Rückseite her durch Erodieren bearbeitet werden, oder die Position des Werkstücks 31 kann in bekannter Weise durch das Heranführen des Erodierdrahts von allen Seiten automatisch aufgenommen werden.

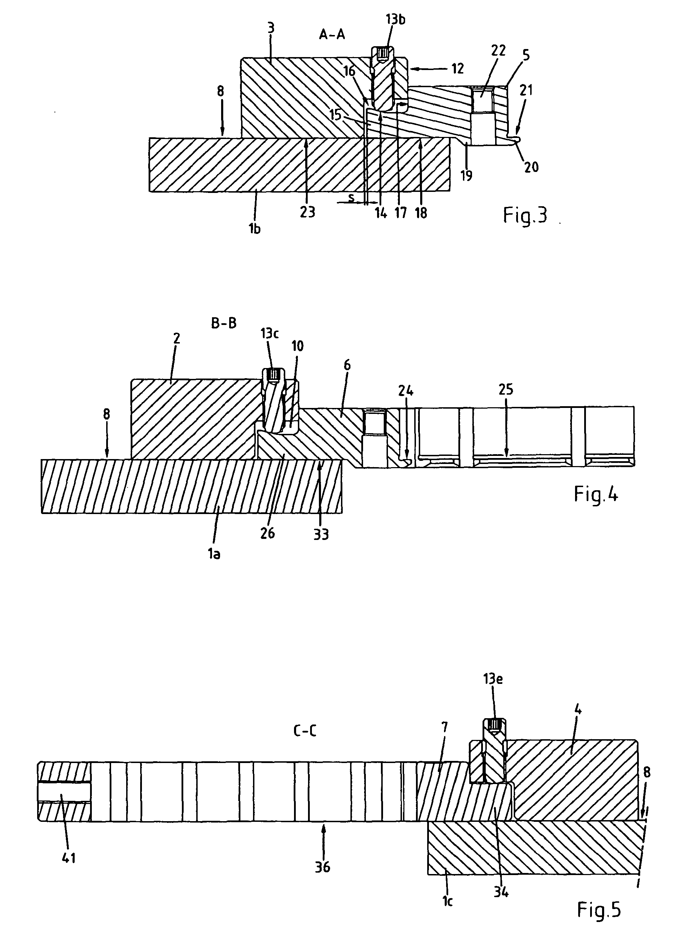

Die Fig. 3 zeigt einen Querschnitt durch die Spanneinrichtung entlang der Linie A-A in Fig. 2. Wie ersichtlich, drückt die Druckschraube 13b auf den Klemmvorsprung 15 der ersten Werkstückaufnahme 5 und fixiert diese damit an der Spannleiste 3. Die Druckschraube 13b drückt mit ihrer abgerundeten Vorderseite 14 derart auf die schräge Spannfläche 16 des Klemmvorsprungs 15 der Werkstückaufnahme 5, dass die Werkstückaufnahme 5 einerseits mit ihrer planen Unterseite 18 gegen die Tischplatte 1b und andererseits mit ihrer rückseitigen Referenzfläche 17 gegen die plane Stirnseite 12 der Spannleiste 3 gedrückt wird. Im weiteren ist ersichtlich, dass die Auflagefläche 21 des zur Abstützung eines Werkstücks vorgesehenen Vorsprungs 20 mit der Oberfläche 8 der Tischplatte 1 b und damit des Bearbeitungstisches fluchtet. Somit wird ein Werkstück beim Abstützen auf der Oberfläche 21 des Vorsprungs 20 der Werkstückaufnahme 5 in Z-Richtung exakt auf die Oberfläche 8 des Bearbeitungstisches ausgerichtet. Im weiteren ist ersichtlich, dass die die Z-Auflage bildende Unterseite 23 der Spannleiste 3 unter einem rechten Winkel zu der eine Anschlagfläche bildenden Stirnseite 12 verläuft. Um sicherzustellen, dass die Werkstückaufnahme 5 mit ihrer rückseitigen Referenzfläche 17 an der planen Stirnseite 12 der Spannleiste 3 anzuliegen kommt, ist der Klemmvorsprung 15 etwas kürzer als die Tiefe der Aussparung 10 der Spannleiste 3 (Fig. 1) in horizontaler Richtung. Dadurch besteht im festgespannten Zustand der Werkstückaufnahme 5 ein Spalt s zwischen der Stirnfläche der Klemmleiste 15 und der Rückwand der Aussparung. Dieser Spalt s bildet gleichzeitig auch eine Schmutz-Zone, in der sich Schmutz ablagern kann, ohne dass dies negative Folgen auf die Spanngenauigkeit einer an der Spannleiste festzulegenden Werkstückaufnahme hat, zumal die für die Positionierung einer Werkstückaufnahme massgebende Fläche, namentlich die plane Stirnseite 12 der Spannleiste 3, einfach zu reinigen ist.

Die Fig. 4 zeigt einen Querschnitt entlang der Linie B-B in Fig. 2. Auch in diesem Fall drückt die Druckschraube 13c mit ihrer abgerundeten Vorderseite derart auf die schräge Spannfläche des Klemmvorsprungs 26 der Werkstückaufnahme 6, dass die Werkstückaufnahme 5 einerseits mit ihrer planen, die Z-Auflage bildenden Unterseite 33 gegen die Oberfläche 8 der Tischplatte 1 a und andererseits mit ihrer rückseitigen Referenzfläche gegen die plane Stirnseite der Spannleiste 2 gedrückt wird. Die Auflageflächen der Vorsprünge 24, 25 zum Festlegen eines Werkstücks fluchten dabei wiederum mit der Oberfläche 8 der Tischplatte 1 a.

Nachdem der Klemmvorsprung 26 in die Aussparung 10 der Spannleiste 2 eingeführt ist, wird die Werkstückaufnahme 6 durch die Spannleiste 2 in ihrer Position gehalten auch wenn die Spannschraube 13c ggf. noch nicht festgespannt ist. Dies hat den grundsätzlichen Vorteil, dass die Werkstückaufnahme 6 nach dem groben Positionieren an der Spannleiste 2 losgelassen werden kann, ohne dass die Gefahr besteht, dass sie seitlich wegkippt.

Die Fig. 5 zeigt einen Querschnitt entlang der Linie C-C in Fig. 2. In diesem Fall wird die in der Form eines Spannrahmens ausgebildete Werkstückaufnahme 7 durch die Druckschraube 13e lediglich in einem rechten Winkel gegen die Oberfläche 8 der Tischplatte 1 c gedrückt, da die Oberseite des Klemmvorsprungs 34 plan ist und parallel zur Unterseite 36 der Werkstückaufnahme 7 verläuft. Die Werkstückaufnahme 7 wird beim Festspannen manuell gegen die Spannleiste 4 gedrückt. Nach dem Festspannen der Werkstückaufnahme 7 fluchtet deren plane Unterseite 36 mit der Oberseite 8 der Tischplatte 1 c. Aus dieser Darstellung ist zudem eine der horizontal verlaufenden Gewindebohrungen 41 ersichtlich, welche der Aufnahme einer Spannschraube (nicht dargestellt) zum Festspannen eines Werkstücks an der Werkstückaufnahme 7 dient.

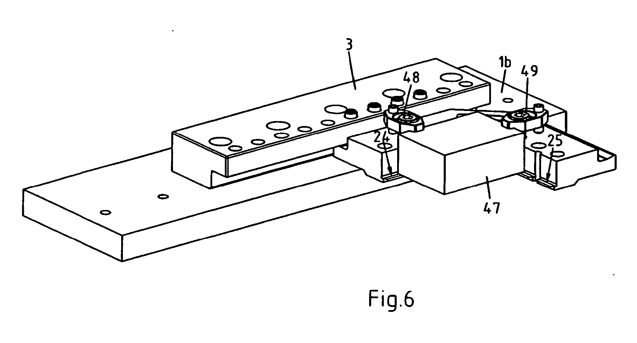

Die Fig. 6 zeigt in perspektivischer Ansicht eine an der Spannleiste 3 festgelegte Werkstückaufnahme 6 zusammen mit einem daran festgespannten Werkstück 47. Zum genauen Positionieren der Werkstückaufnahme 6 entlang der Spannleiste 3 ist ein aus dieser Darstellung nicht ersichtlicher Anschlag vorgesehen. Das beispielhaft in der Form eines Quaders dargestellte Werkstück 47 ist mittels zwei Briden 48, 49 an der winkelförmig ausgebildeten Werkstückaufnahme 6 festgespannt. Das Werkstück 47 ist an beiden Seitenflächen der Werkstückaufnahme 6 sowie auf den beiden Vorsprüngen 24, 25 festgelegt und damit in X, Y und Z-Richtung positioniert. Das an der Werkstückaufnahme festgelegte Werkstück 47 ist weitgehend frei zugänglich und kann mittels einer Werkzeugmaschine wie beispielsweise einer Drahterodiermaschine bearbeitet werden.

Die erfindungsgemäss aufgebaute Spanneinrichtung ist modular aufgebaut, indem einerseits eine oder mehrere Spannleisten Verwendung finden können und andererseits unterschiedlich gestaltete Werkstückaufnahmen zum Einsatz kommen können. Durch das Vorsehen von unterschiedlichen Werkstückaufnahmen kann praktisch jedes beliebige Werkstück schnell, einfach und ggf. positionsgenau an einer oder mehreren Spannleisten festgelegt werden. Anstelle der vorgängig beschriebenen Werkstückaufnahmen können im Rahmen der Erfindung natürlich auch von den vorgängigen Ausführungsbeispielen abweichende Werkstückaufnahmen vorgesehen werden. Beispielsweise können Werkstückaufnahmen in der Form von sogenannten Pendelhaltern oder Pendelköpfen zum Einsatz kommen. Ein weiterer Vorteil besteht darin, dass die Spanneinrichtung wenig verschmutzungsanfällig und sehr stabil ist, so dass auch schwere und grosse Werkstücke daran festgelegt werden können. Durch das Vorsehen von Werkstückaufnahmen 5, 6, 7 deren jeweiliger Klemmvorsprung 15, 26, 27, 34 auf die Aussparung 10 der jeweiligen Spannleiste 3 abgestimmten ist, weist die Spanneinrichtung gerade im Zusammenhang mit grossen und/oder schweren Werkstücken einen weiteren Vorteil auf, indem die Werkstückaufnahmen mit dem daran fixierten Werkstück von einer Bedienperson mit beiden Händen in die ungefähre Position gebracht und dann losgelassen werden können. Der jeweiligen Werkstückhalter 5, 6, 7 wird dann durch den in die Aussparung 10 eingeführten Klemmvorsprung 15, 26, 27, 34 festgehalten auch wenn der Werkstückhalter 5, 6, 7 leicht nach unten wegkippt. Danach kann der Werkstückhalter 5, 6, 7 mittels den Spannschrauben an der jeweiligen Spannleiste festgespannt werden. Gleich verhält es sich beim Ausspannen. Dies ist im Vergleich mit den meisten anderen Spanneinrichtungen ein entscheidender Vorteil, da bei diesen der Werkstückhalter zumeist mit einer Hand festgehalten werden muss, während gleichzeitig mit der anderen Hand die Spannelemente festgezogen bzw. gelöst werden.

### Bezugszeichenliste :

- 1.: Bearbeitungstisch
- 2.: Spannleiste
- 3.: Spannleiste
- 4.: Spannleiste
- 5.: Werkstückaufnahme
- 6.: Werkstückaufnahme
- 7.: Werkstückaufnahme
- 8.: Oberfläche
- 9.: Vorsprung
- 10.: Aussparung
- 11.: Gewindebohrung
- 12.: plane Stirnseite
- 13.: Schrauben
- 14.: bombierte Vorderseite
- 15.: Klemmvorsprung
- 16.: Spannfläche
- 17.: Referenzfläche
- 18.: Unterseite
- 19.: Absatz
- 20.: Vorsprung
- 21.: Auflagefläche
- 22.: Gewindebohrung
- 23.: plane Unterseite (Spannleiste)
- 24.: Vorsprung
- 25.: Vorsprung
- 26.: Klemmvorsprung
- 27.: Klemmvorsprung
- 28.: Klemmvorsprung
- 29.: Schlitz
- 30.: Schlitz
- 31.: Werkstück
- 32.: Gewindebohrung
- 33.: plane Unterseite (Werkstückaufnahme)
- 34.: Klemmvorsprung
- 35.: Spannfläche
- 36.: plane Unterseite
- 37.: Bohrung
- 38.: Bohrung
- 39.: Anschlagstift
- 40.: Gewindebohrung
- 41.: Gewindebohrung
- 42.: zentrale Öffnung
- 43.: erste Rahmenseite
- 44.: zweite Rahmenseite
- 45.: dritte Rahmenseite
- 46.: vierte Rahmenseite
- 47.: Werkstück
- 48.: Bride
- 49.: Bride
- 50.:
- 51.:
- 52.:
- 53.:
- 54.:
- 55.:
- 56.:
- 57.:
- 58.:
- 59.:
- 60.:
- 61.:
- 62.:
- 63.:
- 64.:
- 65.:
- 66.:
- 67.:
- 68.:
- 69.:
- 70.:

## Patentansprüche

1. Spanneinrichtung zum Festlegen von zu bearbeitenden Werkstücken an einer mit einem Bearbeitungstisch (1) versehenen Werkzeugmaschine, insbesondere einer Drahterodiermaschine, mit zumindest einer auf dem Bearbeitungstisch (1) zu befestigenden Spannleiste (2, 3, 4) und zumindest einer Werkstückaufnahme (5, 6, 7), welche positionsgenau an einer Spannleiste (2, 3, 4) festspannbar ist/sind, **dadurch gekennzeichnet, dass** die Spannleiste (3) mit einem länglichen Vorsprung (9) versehen ist, der zwischen sich und dem Maschinentisch (1) eine Aussparung (10) begrenzt, wobei an dem länglichen Vorsprung (9) Spannelemente (13) angebracht sind, welche sich in die Aussparung (10) erstrecken, und wobei die Werkstückaufnahme (5, 6, 7) einen Klemmvorsprung (15, 27, 34) aufweist, der in die Aussparung (10) einführbar und mittels den Spannelementen (13) darin festspannbar ist.

2. Spanneinrichtung nach Anspruch 1, **dadurch gekennzeichnet, dass** die Spannleiste (3) auf der dem Maschinentisch (1) zuzuwendenden Unterseite mit einer planen Auflagefläche (23) versehen ist, und dass der längliche Vorsprung (9) der Spannleiste (3) mit einer Anschlagfläche (12) versehen ist, die unter einem rechten Winkel zu der die Z-Auflage bildenden Auflagefläche (23) der Spannleiste (3) verläuft.

3. Spanneinrichtung nach Anspruch 1 oder 2, **dadurch gekennzeichnet, dass** die Spannelemente (13) derart angeordnet sind, dass sie den jeweiligen Klemmvorsprung (15, 27, 34) gegen den Maschinentisch (1) zu drücken bestimmt sind.

4. Spanneinrichtung nach Anspruch 2 oder 3, **dadurch gekennzeichnet, dass** die Werkstückaufnahme (5) auf der Seite des Klemmvorsprungs (15) mit einer Referenzfläche (17) versehen ist, welche zur Anlage an der Anschlagfläche (12) der Spannleiste (3) bestimmt ist.

5. Spanneinrichtung nach Anspruch 4, **dadurch gekennzeichnet, dass** der Klemmvorsprung (15) auf der Oberseite mit einer schräg zulaufenden Spannfläche (16) versehen ist, an welcher die an dem länglichen Vorsprung (9) der Spannleiste (3) angbrachten Spannelemente (13) derart angreifen, dass die Werkstückaufnahme (5) beim Festspannen an der Spannleiste (3) zu der Spannleiste (3) hingezogen wird und mit ihrer Referenzfläche (17) an der Anschlagfläche (12) der Spannleiste (3) zur Anlage kommt.

6. Spanneinrichtung nach einem der vorhergehenden Ansprüche, **dadurch gekennzeichnet, dass** die Werkstückaufnahme (5, 6, 7) mit einer planen, zur Auflage auf dem Maschinentisch (1) bestimmten Unterseite (18, 33, 36) versehen ist

7. Spanneinrichtung nach Anspruch 6, **dadurch gekennzeichnet, dass** die Werkstückaufnahme (5) auf der dem Klemmvorsprung (15) abgewandten Seite mit einem sich über die plane Unterseite (18) nach unten erstreckenden Absatz (19) versehen ist, der endseitig eine Auflagefläche (21) aufweist, die sich in der gleichen Ebene erstreckt wie die plane Unterseite (18) der Werkstückaufnahme (5).

8. Spanneinrichtung nach einem der vorhergehenden Ansprüche, **dadurch gekennzeichnet, dass** die Werkstückaufnahme (6) als Winkelelement ausgebildet ist und zwei um 90° zueinander versetzte leistenförmige Vorsprünge (24, 25) aufweist, deren Oberseiten Auflageflächen für ein an der Werkstückaufnahme (6) festzulegendes Werkstück (47) bilden.

9. Spanneinrichtung nach Anspruch 8, **dadurch gekennzeichnet, dass** die als Winkelelement ausgebildete Werkstückaufnahme (6) zwei um 90° zueinander versetzte Klemmvorsprünge (26, 27) aufweist.

10. Spanneinrichtung nach Anspruch 9, **dadurch gekennzeichnet, dass** die als Winkelelement ausgebildete Werkstückaufnahme (6) zusätzlich einen weiteren, zwischen den beiden um 90° zueinander versetzten Klemmvorsprüngen (26, 27) angeordneten Klemmvorsprung (28) aufweist, der jeweils um 45° versetzt zu den beiden genannten Klemmvorsprüngen (24, 25) angeordnet ist.

11. Spanneinrichtung nach Anspruch 8, 9 oder 10, **dadurch gekennzeichnet, dass** zumindest der eine Schenkel der Werkstückaufnahme (6) auf der Innenseite mit vertikal verlaufenden Schlitzen (29, 30) versehen ist, welche die Klemmvorsprünge (26, 27) in einzelne Abschnitte unterteilen.

12. Spanneinrichtung nach einem der Ansprüche 1 bis 6, **dadurch gekennzeichnet, dass** die Werkstückaufnahme (7) in der Form eines Spannrahmens ausgebildet ist und zumindest eine Öffnung (42) zur Aufnahme eines Werkstücks aufweist, wobei zumindest eine Rahmenseite (45, 46) der Werkstückaufnahme (7) mit horizontal verlaufenden Gewindebohrungen (40, 41) zur Aufnahme von Spannschrauben zum Festspannen eines Werkstücks versehen ist.

13. Spanneinrichtung nach Anspruch 12, **dadurch gekennzeichnet, dass** zumindest eine Rahmenseite (43, 44) der Werkstückaufnahme (7) auf der der Öffnung (42) zugewandten Innenseite mit vertikal verlaufenden Bohrungen (37, 38) zur Aufnahme von Anschlagstiften (39) versehen ist.

14. Spanneinrichtung nach Anspruch 12 oder 13, **dadurch gekennzeichnet, dass** die Werkstückaufnahme (7) mit einer durchgehend planen Unterseite (36) versehen ist.

15. Spanneinrichtung nach einem der vorhergehenden Ansprüche, **dadurch gekennzeichnet, dass** die Spannvorrichtung zumindest zwei Spannleisten (2, 3, 4) sowie zumindest zwei unterschiedlich ausgebildete Werkstückaufnahmen (5, 6, 7) umfasst.

## Claims

1. A clamping apparatus for fixedly locating workpieces to be machined on a machine tool, particularly on a wire spark erosion machine, provided with a work table (1), comprising at least one clamping bar (2, 3, 4) to be secured to said work table (1), and at least one workpiece pallet (5, 6, 7) clampable to said clamping bar (2, 3, 4) in a precise position, **characterized in that** said clamping bar (2, 3, 4) is provided with an elongated protuberance (9), defining between it and the said work table (1) a recess (10) and clamping elements (13) arranged at said elongated protuberance (9) extending into said recess (10), said workpiece pallet (5, 6, 7) comprising a clamping protuberance (15, 27, 34) insertable into said recess (10) to be clampingly fixed therein by means of said clamping elements (13).

2. The clamping apparatus as set forth in claim 1, wherein said clamping bar (3) is bottomed by a flat supporting face (23) to face said work table (1) and that said elongated protuberance (9) of said clamping bar (3) is provided with an abutment face (12) oriented at right angles to said supporting face (23) of said clamping bar (3) forming the Z support.

3. The clamping apparatus as set forth in claim 1 or 2, **characterized in that** said clamping elements (13) are configured to urge each corresponding clamping protuberance (15, 27, 34) against said work table (1).

4. The clamping apparatus as set forth in claim 2 or 3, **characterized in that** located on a side of said clamping protuberance (15) said workpiece pallet (5) is provided with a datum face (17) devised to contact said abutment face (12) of said clamping bar (3).

5. The clamping apparatus as set forth in claim 4, **characterized in that** said clamping protuberance (15) is topped by a tapered clamping surface (16) engaging said clamping elements (13) provided on said elongate protruding portion (9) of said clamping bar (3) such that said workpiece pallet (5) is pulled towards said clamping bar (3) to rest by its datum face (17) against said abutment face (12) of said clamping bar (3).

6. The clamping apparatus as set forth in any of the preceding claims, **characterized in that** said workpiece pallet (5, 6, 7) is bottomed by a flat surface (18, 33, 36) devised to rest on said work table (1).

7. The clamping apparatus as set forth in claim 6, **characterized in that** said workpiece pallet (5) is provided with a downswept heel (19) covering the flat bottom surface (18) located on the side facing away from said clamping protuberance(15) and ending in a supporting face (21) extending in the same plane as said flat bottom surface (18) of said workpiece pallet (5).

8. The clamping apparatus as set forth in any of the preceding claims, **characterized in that** said workpiece pallet (6) is configured as an angled element comprising two leg-shaped protuberances (24, 25) offset relative to each other by 90°, the top sides of which constituting faces for supporting a workpiece (47) to be defined at said workpiece pallet (6).

9. The clamping apparatus as set forth in claim 8, **characterized in that** said workpiece pallet (6) configured as an angled element includes two clamping protuberances (26, 27) offset to each other by 90°.

10. The clamping apparatus as set forth in claim 9, **characterized in that** said workpiece pallet (6) configured as an angled element includes, located disposed between said two clamping protuberances (26, 27) offset to each other by 90° an additional clamping protuberance (28) each arranged offset by angle of 45° from said two clamping protuberances (24, 25).

11. The clamping apparatus as set forth in claim 8, 9 or 10, **characterized in that** at least the one leg of said workpiece pallet (6) is provided at the inner side with vertically running grooves (29, 30), subdividing said clamping protuberances (26, 27) into separate portions.

12. The clamping apparatus as set forth in any of the claims 1 to 6, **characterized in that** said workpiece pallet (7) is configured as a clamping frame, having at least one aperture (42) to mount a workpiece, whereby at least one frame side (45, 46) of said workpiece pallet (7) is machined with horizontal tappings (40, 41) to receive clamping screws for clamping a workpiece.

13. The clamping apparatus as set forth in claim 12, **characterized in that** at least one frame side (43, 44) of said workpiece pallet (7) is provided with vertically drillings (37, 38) located at the inner side of said frame facing said aperture to receive stop pins (39).

14. The clamping apparatus as set forth in claim 12 or 13, **characterized in that** said workpiece pallet (7) is provided with a continuously flat bottom surface (36).

15. The clamping apparatus as set forth in any of the preceding claims, **characterized in that** it comprises at least two clamping bars (2, 3, 4) as well as at least two differently configured workpiece pallets (5, 6, 7)

## Revendications

1. Dispositif de fixation pour positionner des pièces à usiner dans une machine-outil pourvue d'une table d'usinage (1), en particulier d'une machine d'étincelage par fil, avec au moins une baguette de fixation (2, 3, 4) à fixer sur la table d'usinage (1) et au moins un logement de pièces (5, 6, 7) qui peut/peuvent être serrés en position précise sur une baguette de fixation (2, 3, 4), **caractérisé en ce que** la baguette de fixation (3) est pourvue d'une saillie oblongue (9) qui délimite un évidement (10) entre elle-même et la table de la machine (1), des éléments de fixation (13) étant montés sur la saillie (9) oblongue, lesquels s'étendent dans l'évidement (10), et le logement de pièces (5, 6, 7) présentant une saillie de serrage (15, 27, 34) qui peut être introduite dans l'évidement (10) et serrée à l'aide des éléments de fixation (13) dedans.

2. Dispositif de fixation selon la revendication 1, **caractérisé en ce que** la baguette de fixation (3) est pourvue sur le côté inférieur à tourner vers la table de la machine (1) d'une surface d'appui plane (23) et **en ce que** la saillie (9) oblongue de la baguette de fixation (3) est pourvue d'une surface de butée (12) qui s'étend selon un angle droit par rapport à la surface d'appui (23) formant l'appui en z de la baguette de fixation (3).

3. Dispositif de fixation selon la revendication 1 ou 2, **caractérisé en ce que** les éléments de fixation (13) sont disposés de telle manière qu'ils soient destinés à presser la saillie de serrage respective (15, 27, 34) contre la table de la machine (1).

4. Dispositif de fixation selon la revendication 2 ou 3, **caractérisé en ce que** le logement de pièces (5) est pourvu sur le côté de la saillie de serrage (15) d'une surface de référence (17) qui est destinée à l'appui sur la surface de butée (12) de la baguette de serrage (3).

5. Dispositif de fixation selon la revendication 4, **caractérisé en ce que** la saillie de serrage (15) est pourvue sur le côté supérieur d'une surface de fixation (16) se terminant en biais, sur laquelle agissent les éléments de fixation (13) montés sur la saillie (9) oblongue de la baguette de fixation (3) de telle manière que le logement de pièces (5) soit tiré vers la baguette de fixation (3) lors du serrage sur celle-ci et vienne en appui avec sa surface de référence (17) sur la surface de butée (12) de la baguette de fixation (3).

6. Dispositif de fixation selon l'une quelconque des revendications précédentes, **caractérisé en ce que** le logement de pièces (5, 6, 7) est pourvu d'un côté inférieur (18, 33, 36) plat, destiné à l'appui sur la table de la machine (1).

7. Dispositif de fixation selon la revendication 6, **caractérisé en ce que** le logement de pièces (5) est pourvu sur le côté éloigné de la saillie de serrage (15), d'un épaulement (19) s'étendant vers le bas sur le côté inférieur plat (18) qui présente côté extrémité une surface d'appui (21) qui s'étend dans le même plan que le côté inférieur plat (18) du logement de pièces (5).

8. Dispositif de fixation selon l'une quelconque des revendications précédentes, **caractérisé en ce que** le logement de pièces (6) est réalisé comme un élément angulaire et présente deux saillies (24, 25) en forme de baguette, décalées de 90° l'une par rapport à l'autre, dont les côtés supérieurs forment des surfaces d'appui pour une pièce (47) à positionner sur le logement de pièces (6).

9. Dispositif de fixation selon la revendication 8, **caractérisé en ce que** le logement de pièces (6) réalisé comme un élément angulaire présente deux saillies de serrage (26, 27) décalées de 90° l'une par rapport à l'autre.

10. Dispositif de fixation selon la revendication 9, **caractérisé en ce que** le logement de pièces (6) réalisé comme un élément angulaire présente en outre une autre saillie de serrage (28) disposée entre les deux saillies de serrage (26, 27) décalées de 90° l'une par rapport à l'autre, qui est disposée décalée respectivement de 45° par rapport aux deux saillies de serrage (24, 25) citées.

11. Dispositif de fixation selon la revendication 8, 9 ou 10, **caractérisé en ce qu'**au moins l'une branche du logement de pièces (6) est pourvue sur le côté intérieur de fentes (29, 30) s'étendant verticalement qui divisent les saillies de serrage (26, 27) en sections individuelles.

12. Dispositif de fixation selon l'une quelconque des revendications 1 à 6, **caractérisé en ce que** le logement de pièces (7) est réalisé sous la forme d'un cadre de serrage et présente au moins une ouverture (42) pour le logement d'une pièce, au moins un côté de cadre (45, 46) du logement de pièces (7) étant pourvu de perçages filetés (40, 41) s'étendant horizontalement pour le logement de vis de serrage destinées au serrage d'une pièce.

13. Dispositif de fixation selon la revendication 12, **caractérisé en ce qu'**au moins un côté de cadre (43, 44) du logement de pièces (7) est pourvu sur le côté intérieur tourné vers l'ouverture (42), de perçages (37, 38) s'étendant verticalement pour le logement de goupilles de butée (39).

14. Dispositif de fixation selon la revendication 12 ou 13, **caractérisé en ce que** le logement de pièces (7) est pourvu d'un côté inférieur (36) plat en continu.

15. Dispositif de fixation selon l'une quelconque des revendications précédentes, **caractérisé en ce que** le dispositif de fixation comporte au moins deux baguettes de fixation (2, 3, 4) ainsi qu'au moins deux logements de pièces (5, 6, 7) réalisés différemment.
